# EUROPÄISCHE PATENTANMELDUNG

(11) **EP 2 369 834 A2**
(43) Veröffentlichungstag der Anmeldung: **28.09.2011**
(21) Anmeldenummer: 10014399.9
(22) Anmeldetag: 09.11.2010
(51) Int. Cl.: H04N 5/374

(54) **Bildsensor**

(30) Priorität: 13.11.2009 DE 102009053281
(71) Anmelder: Arnold & Richter Cine Technik GmbH & Co. Betriebs KG, 80799 München (DE)
(72) Erfinder: Cielinski, Michael, 85521 Ottobrunn (DE); Wessely, Uwe, 80807 München (DE); Oehler, Achim, 81247 München (DE)
(74) Vertreter: Manitz, Finsterwald & Partner GbR

(57) **Zusammenfassung**

Die Erfindung betrifft einen Bildsensor, insbesondere CMOS-Bildsensor für digitale Kameras, mit einer Vielzahl von in Zeilen und Spalten angeordneten Pixeln, wobei das jeweilige Pixel umfasst: ein lichtempfindliches Detektorelement, um während eines Belichtungsvorgangs aus einfallendem Licht elektrische Ladung zu erzeugen, einen Ausleseknoten, ein Transfer-Gate, an das ein Transfer-Steuerpuls anlegbar ist, um einen Ladungstransfer von dem Detektorelement zu dem Ausleseknoten zu ermöglichen, und eine Rücksetzeinrichtung, um eine in dem Ausleseknoten vorhandene Ladung auf einen Referenzwert rückzusetzen. Der Bildsensor weist ferner eine Steuereinrichtung auf zum Steuern des Transfer-Gates und der Rücksetzeinrichtung des jeweiligen Pixels. Die Steuereinrichtung ist so ausgelegt ist, dass das jeweilige Pixel während der fortlaufenden Ladungserzeugung in einem einzigen Belichtungsvorgang in mehreren Ausleseschritten ausgelesen wird, und zwar derart, dass für jeden der mehreren Ausleseschritte ein jeweiliger Transfer-Steuerpuls an das Transfer-Gate angelegt und danach ein jeweiliges Ausleseergebnis erzeugt wird, wobei zwischen den Transfer-Steuerpulsen des jeweiligen Belichtungsvorgangs die Rücksetzeinrichtung aktiviert wird, und wobei lediglich der letzte Transfer-Steuerpuls einen vollständigen Ladungstransfer der jeweiligen in dem Detektorelement vorhandenen Ladung zu dem Ausleseknoten ermöglicht.

## Beschreibung

Die vorliegende Erfindung betrifft einen Bildsensor, insbesondere einen CMOS-Bildsensor, für digitale Kameras. Der Bildsensor umfasst eine Vielzahl von in Zeilen und Spalten angeordneten Pixeln. Die Pixel umfassen jeweils ein lichtempfindliches Detektorelement, um während eines Belichtungsvorgangs aus einfallendem Licht elektrische Ladung zu erzeugen, einen Ausleseknoten, ein Transfer-Gate, an das ein Transfer-Steuerpuls anlegbar ist, um einen Ladungstransfer von dem Detektorelement zu dem Ausleseknoten zu ermöglichen, und eine Rücksetzeinrichtung, um eine in dem Ausleseknoten vorhandene Ladung auf einen Referenzwert rückzusetzen. Der Bildsensor umfasst ferner eine Steuereinrichtung zum Steuern des Transfer-Gates und der Rücksetzeinrichtung des jeweiligen Pixels. Die vorliegende Erfindung betrifft weiterhin ein Verfahren zum Auslesen eines Bildsensors, insbesondere eines CMOS-Bildsensors, für digitale Kameras.

Eine digitale bzw. elektronische Kamera wird kann beispielsweise dazu verwendet werden, Bildsequenzen digital aufzuzeichnen, die später in einem Kino vorgeführt werden. Dabei ist es vorteilhaft, wenn die Kamera eine hohe Lichtempfindlichkeit und zugleich einen hohen Dynamikumfang aufweist. Diese beiden Eigenschaften sind wesentlich für die Qualität der Aufzeichnung, und sie helfen beispielsweise, die Kosten für die Beleuchtung der Szene zu reduzieren.

Der Bildsensor einer derartigen Kamera wandelt dabei durch das Objektiv der Kamera fallendes Licht in elektrische Signale um. Der Bildsensor umfasst hierfür eine Vielzahl von lichtempfindlichen Elementen, die sog. Pixel. In den Pixeln wird das einfallende Licht in elektrische Ladung gewandelt. Zum Auslesen eines von der Kamera aufgenommenen Bildes werden die Pixel beispielsweise der Reihe nach adressiert und eine zu der Ladung des jeweiligen Pixels proportionale Spannung erzeugt, die zu einem Ausgang des Bildsensors geleitet wird.

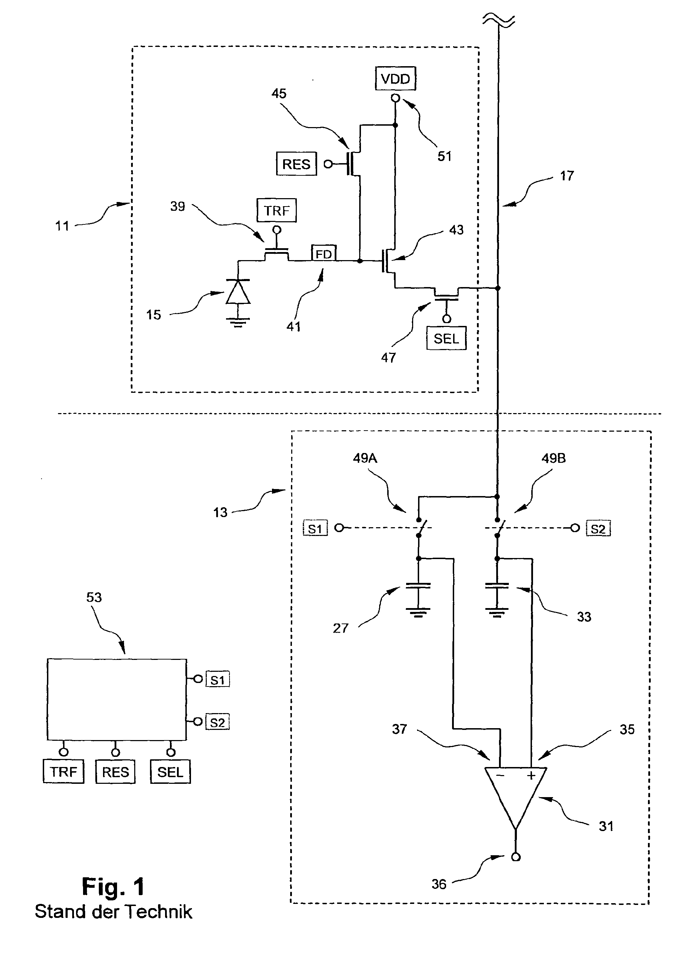

Ein Bildsensor der eingangs genannten Art kann beispielsweise wie in Fig. 1 dargestellt aufgebaut sein, in der stellvertretend lediglich ein einziges Pixel 11 dargestellt ist. Das dargestellte Pixel 11 umfasst ein lichtempfindliches Detektorelement in Form einer sog. Pinned-Diode (PD) 15, die über ein Transfer-Gate 39 mit einem Ausleseknoten 41, der als eine sog. Floating Diffusion (FD) ausgebildet ist, ladungsgekoppelt ist. Der Ausleseknoten 41 ist mit dem Gate eines als Source-Follower ausgebildeten Wandler-Feldeffekttransistors (FET) 43, der eine Ladungs-Spannungs-Wandlerschaltung darstellt, verbunden. Darüber hinaus ist der Ausleseknoten 41 über einen Rücksetz-FET 45 mit einer positiven Spannungsversorgung 51 verbunden. Einer der beiden Kanalanschlüsse des Wandler-FETs 43 ist ebenfalls mit der positiven Versorgung 51 verbunden, wohingegen der andere der beiden Kanalanschlüsse des Wandler-FETs 43 über einen Auswahl-FET 47, der als Zeilenauswahlschalter fungiert, mit der dem dargestellten Pixel zugeordneten Spaltenleitung 17 verbindbar ist.

Die Spaltenleitung 17 ist dafür vorgesehen, die in der zugehörigen Spalte angeordneten Pixel, insbesondere Pixel 11, mit einer gemeinsamen Spaltenverstärkerschaltung 13 zu verbinden. Die Spaltenverstärkerschaltung 13 umfasst einen ersten Kondensator 27, der mit einem Anschluss gegen Masse geschaltet und mit dem anderen Anschluss über einen Schalter 49A wahlweise mit der Spaltenleitung 17 verbindbar ist. Die Spaltenverstärkerschaltung 13 umfasst ferner einen zweiten Kondensator 33, der mit einem Anschluss ebenfalls gegen Masse geschaltet und mit dem anderen Anschluss über einen weiteren Schalter 49B ebenfalls wahlweise mit der Spaltenleitung 17 verbindbar ist. Darüber hinaus umfasst die Spaltenverstärkerschaltung 13 einen Verstärker 31, an dessen negativem Eingang 37 die an dem ersten Kondensator 27 anliegende Spannung und an dessen positivem Eingang 35 die an dem zweiten Kondensator 33 anliegende Spannung eingegeben wird.

Das Transfer-Gate 39 ist über eine Steuerleitung TRF, der Rücksetz-FET 45 ist über eine Steuerleitung RES, der Auswahl-FET 47 ist über eine Steuerleitung SEL, der Schalter 49A ist über eine Steuerleitung S1 und der Schalter 49B ist über eine Steuerleitung S2 von einer gemeinsamen Steuereinrichtung 53 des Bildsensors steuerbar.

Nachfolgend wird die Funktionsweise eines derartigen Pixels 11 exemplarisch, basierend auf einer 3.3V-CMOS-Technologie, beschrieben.

Das während eines Belichtungsvorgangs einfallende Licht wird durch die Pinned-Diode 15 in elektrische Ladung umgewandelt, so dass sich die Pinned-Diode 15 mit Elektronen füllt. Hierbei werden die Steuerleitungen TRF, RES und SEL zunächst jeweils auf 0 V gehalten, d. h. die hierdurch angesteuerten Schalter 39, 45, 47 sind geöffnet.

Zum Auslesen wird in einem ersten Schritt (Reset 1) an die Steuerleitung RES kurzzeitig eine Spannung von 3.3 V angelegt, um die durch Leckströme und/oder Streulicht gebildete Ladung aus dem Ausleseknoten 41 zu entfernen.

In einem zweiten Schritt (Lesen des Referenzwerts) wird an die Steuerleitung SEL eine Spannung von 3.3 V angelegt (Schließen des Schalters 47), und der Schalter 49A wird geschlossen. Hierdurch wird der Spannungspegel des Ausleseknotens 41 über den Wandler-FET 43 und den Auswahl-FET 47 auf die Spaltenleitung 17 geschaltet und somit zum Kondensator 27 geführt. Nachdem das System eingeschwungen ist, wird der Kondensator 27 durch Öffnen des Schalters 49A wieder von dem Pixel 11 getrennt.

Anschließend wird in einem dritten Schritt (Übertragen der Ladung) an die Steuerleitung TRF kurzzeitig eine Spannung von 3.3 V angelegt, so dass die Elektronen von der Pinned-Diode 15 zu dem Ausleseknoten 41 fließen können.

Danach wird in einem vierten Schritt (Lesen des Signals) der Schalter 49B geschlossen. Hierdurch wird der Spannungspegel des Ausleseknotens 41 über den Wandler-FET 43 und den Auswahl-FET 47 auf die Spaltenleitung 17 geschaltet und somit zum Kondensator 33 geführt. Nachdem das System eingeschwungen ist, wird der Kondensator 33 durch Öffnen des Schalters 49B wieder von dem Pixel 11 getrennt und die Steuerleitung SEL wird wieder auf 0 V gelegt.

Schließlich wird in einem fünften Schritt (Reset 2) an die Steuerleitungen RES und TRF kurzzeitig eine Spannung von 3.3 V angelegt, um die Ladung aus dem Ausleseknoten 41 und eventuelle Restladungen aus der Pinned-Diode 15 zu entfernen. Hierdurch ist der Belichtungsvorgang abgeschlossen, und der nächste Belichtungsvorgang kann wieder mit einem völlig "leeren" Pixel beginnen.

Am Ausgang 36 des Verstärkers 31 liegt nun eine Spannung an, die der durch den Belichtungsvorgang in der Pinned-Diode 15 erzeugten Ladungsmenge entspricht.

Die dargestellte Schaltung des Spaltenverstärkers ist rein exemplarisch für eine Vielzahl von möglichen Varianten, die mit so genanntem Correlated-Double-Sampling funktionieren. Bei diesem Verfahren wird generell der Pegel des leeren Ausleseknotens 41 als Referenzwert genommen und vom Pegel des Signals abgezogen, um das Rauschen zu reduzieren. Es gibt auch Schaltungen, bei denen auf das vorgenannte Abziehen des Pegels des leeren Ausleseknotens 41 verzichtet wird, z.B. zur Steigerung der Geschwindigkeit beim Auslesen. In diesem Fall wird die Spannung des Kondensators 33 direkt zu dem Ausgang 36 weitergeleitet.

Um bei dem anhand von Fig. 1 beschriebenen Bildsensor eine hohe Lichtempfindlichkeit zu gewährleisten, ist es nötig, dass die durch das einfallende Licht in der Pinned-Diode 15 erzeugten Ladungen an dem Gate des Wandler-FET 43 eine hohe Spannung bewirken. Dies wird dadurch erreicht, dass die Kapazität des Ausleseknotens 41 klein gehalten wird. Bei einer Kapazität von beispielsweise 4 fF bewirkt jedes Elektron eine Spannungsänderung von 40 µV. Besitzt die Kamera ein thermisches Rauschen von z.B. 200 µV, sind damit bereits 5 Elektronen bzw. 5 Photonen detektierbar. Dies entspricht der Rauschgrenze des jeweiligen Pixels.

Der anhand von Fig. 1 beschriebene Bildsensor besitzt damit zwar eine hohe Lichtempfindlichkeit, jedoch nur einen geringen Dynamikumfang. Bei der vorstehend genannten Kapazität von 4 fF ist der Ausleseknoten 41 bereits mit ca. 30.000 Elektronen vollständig gefüllt. Mit dieser Ladungsmenge ist also die Sättigungsgrenze des jeweiligen Pixels erreicht. 30.000 Elektronen bewirken eine Spannung von etwa 1 V, wodurch die Grenze des elektrischen Bereichs erreicht ist, der an die Ausgänge weitergeleitet werden kann.

Unter Berücksichtigung der Rauschgrenze (5 Elektronen) ergibt sich eine maximal erreichbare Dynamik von 6.000:1. Ein fotographischer Film hingegen besitzt eine Dynamik von über 30.000:1.

Zur Erhöhung des Dynamikumfangs ist es bekannt, wenigstens zwei Aufnahmen, die unterschiedliche Belichtungszeiten besitzen, zu kombinieren, wobei die Aufnahmen nacheinander aufgenommen werden. Dies ist bei bewegten Objekten aufgrund des zeitlichen Versatzes der zu kombinierenden Aufnahmen jedoch nicht möglich.

Der Erfindung liegt die Aufgabe zugrunde, eine Möglichkeit anzugeben, bei einem Bildsensor bzw. einem Verfahren der eingangs genannten Art neben einer hohen Lichtempfindlichkeit auch einen hohen Dynamikumfang zu gewährleisten.

Diese Aufgabe wird durch einen Bildsensor mit den Merkmalen des Anspruchs 1 gelöst, und insbesondere dadurch, dass die Steuereinrichtung so ausgelegt ist, dass das jeweilige Pixel während der fortlaufenden Ladungserzeugung in einem einzigen Belichtungsvorgang in mehreren Ausleseschritten ausgelesen wird, und zwar derart, dass für jeden der mehreren Ausleseschritte ein jeweiliger Transfer-Steuerpuls an das Transfer-Gate angelegt und danach ein jeweiliges Ausleseergebnis erzeugt wird, wobei zwischen den Transfer-Steuerpulsen des jeweiligen Belichtungsvorgangs die Rücksetzeinrichtung aktiviert wird, und wobei lediglich der letzte Transfer-Steuerpuls einen vollständigen Ladungstransfer der jeweiligen in dem Detektorelement vorhandenen Ladung zu dem Ausleseknoten ermöglicht.

Erfindungsgemäß ist also vorgesehen, ein Detektorelement nicht nur einmal und am Ende des Belichtungsvorgangs auszulesen, sondern zusätzlich bereits zuvor, während des noch laufenden Belichtungsvorgangs. Für einen einzigen Belichtungsvorgang sind also mehrere Ausleseschritte vorgesehen, wobei für jeden Ausleseschritt das Transfer-Gate zunächst geschlossen ist (während Ladung im Detektorelement erzeugt wird) und durch einen kurzzeitigen Transfer-Steuerpuls das Transfer-Gate temporär geöffnet wird, um einen Transfer zumindest eines Teils der Ladung zu dem Ausleseknoten zu ermöglichen. Anhand der somit zu dem Ausleseknoten übertragenen Ladung wird für jeden Ausleseschritt ein Ausleseergebnis erzeugt (z.B. durch Schalten eines der jeweiligen Ladung in dem Ausleseknoten 41 entsprechenden Spannungssignals auf die Spaltenleitung 17 und Speichern des Spannungssignals in einem Kondensator 33, wie zu Fig. 1 erläutert). Zwischen zwei aufeinander folgenden Transfer-Steuerpulsen wird die Rücksetzeinrichtung kurzzeitig aktiviert, d.h. nach dem Erzeugen eines Ausleseergebnisses oder vor dem Anlegen des nächsten Transfer-Steuerpulses.

Da in dem jeweiligen Pixel mit einem vor dem letzten Ausleseschritt erfolgenden Ausleseschritt Ladung gelöscht und damit wieder "Platz" für weitere Ladungsträger geschaffen werden kann, kann die von dem jeweiligen Pixel während eines einzigen Belichtungsvorgangs insgesamt auslesbare Ladungsmenge deutlich erhöht werden. Insbesondere können die Ausleseergebnisse der einzelnen Ausleseschritten miteinander verrechnet, beispielsweise addiert werden, ggf. mit unterschiedlichen Gewichtungen, um einen Ausgabewert für die während des Belichtungsvorgangs in dem jeweiligen Pixel erzeugte Ladung zu bestimmen. Hierdurch erhöht sich die Sättigungsgrenze und damit die maximale Aussteuerbarkeit bzw. maximal mögliche Belichtung des jeweiligen Pixels.

Nur der letzte Transfer-Steuerpuls ermöglicht, die in dem Detektorelement aktuell vorhandene Ladung vollständig in den Ausleseknoten zu transferieren. Insbesondere wird beim letzten Ausleseschritt das Potential des unter dem Transfer-Gate liegenden Kanals auf einen Wert gezogen, der einen vollständigen Abfluss von in dem Potentialtopf des Detektorelements befindlichen Ladungsträgern ermöglicht. Anschaulich gesprochen wird das Potential des vorgenannten Kanals und damit das Potential der den Potentialtopf begrenzenden Wand auf einen Wert gezogen, der unterhalb des Potentialwerts des Potentialtopfbodens liegt.

Der Steuerwert des Transfer-Steuerpulses eines vor dem letzten Ausleseschritts erfolgenden Ausleseschritts ist gegenüber dem Steuerwert des Transfer-Steuerpulses des letzen Ausleseschritts verringert und derart gewählt, dass nach dem Ausleseschritt eine Restladung in dem Detektorelement verbleibt, d.h. das Potential des vorgenannten Kanals besitzt dann einen Wert, der zwischen dem Potentialwert des Rands des Potentialtopfs des Detektorelements und dem Potentialwert des Potentialtopfbodens liegt. Bei einem Transfer-Steuerpuls eines vor dem letzten Ausleseschritt erfolgenden Ausleseschritts wird Ladung nur dann übertragen, wenn die in dem Detektorelement aktuell vorhandene Ladung größer ist als die vorgenannte Restladung. Wird das jeweilige Pixel während eines einzigen Belichtungsvorgangs mehr als zweimal ausgelesen, sind sämtliche Steuerwerte der Transfer-Steuerpulse der vor dem letzten Ausleseschritt erfolgenden Ausleseschritte wie vorstehend erläutert gewählt.

Mit anderen Worten besitzt der letzte Transfer-Steuerpuls einen Steuerwert, der das Transfer-Gate vollständig öffnet (um die in dem Detektorelement vorhandene Ladung vollständig auszulesen). Die vor dem letzten Transfer-Steuerpuls angelegten Transfer-Steuerpulse besitzen hingegen einen jeweiligen Steuerwert, der das Transfer-Gate lediglich teilweise öffnet (wobei jedes Mal eine Restladung in dem Detektorelement verbleibt, sofern dort überhaupt eine Ladung vorhanden ist).

Bei geringer Belichtung wird in dem Detektorelement nur eine geringe Ladungsmenge erzeugt. Liegt diese Ladungsmenge unter der vorgenannten Restladung, kann diese Ladungsmenge nur durch den letzten Ausleseschritt ausgelesen werden, jedoch nicht - auch nicht teilweise - durch den oder die übrigen Ausleseschritte. Bei geringer Belichtung ist es folglich ausreichend, bei der Bestimmung eines Ausgabewerts für die während der Belichtungszeit in dem jeweiligen Pixel erzeugte Ladung, d.h. bei der Auswertung der während eines einzigen Belichtungsvorgangs erzeugten Ladung, lediglich den letzten Ausleseschritt zu berücksichtigen. Der oder die übrigen Ausleseschritte können vollständig ignoriert werden. Hierdurch wird erreicht, dass sich - trotz des an sich mehrschrittigen Auslesens - das vorgenannte thermische Rauschen, welches mit der Wurzel der Anzahl der ausgewerteten Ausleseschritte steigt, nicht erhöht. Ein besonderer Vorteil der Erfindung besteht darin, dass die gesamte in dem Detektorelement erzeugte Ladung ausgelesen wird und verwertet werden kann, d.h. die gesamte erzeugte Ladung trägt zur Erzeugung der genannten Ausleseergebnisse bei.

In Summe kann daher eine Erhöhung der maximalen Aussteuerbarkeit des Bildsensors erreicht werden, ohne dass sich das thermische Rauschen erhöht, d.h. der Bildsensor besitzt weiterhin eine hohe Lichtempfindlichkeit. Dadurch ergibt sich ein erhöhter Dynamikumfang.

Auf zuschaltbare Kapazitäten für die Pixel kann bei dem erfindungsgemäßen Bildsensor somit verzichtet werden. Derartige zuschaltbare Kapazitäten erhöhen zwar den Dynamikumfang, sie verringern jedoch die Lichtempfindlichkeit, da der von der jeweiligen Kapazität, einem jeweiligen zusätzlichen Transistor für die Kapazität und einer zusätzlichen Ansteuerleitung benötigte Platz nicht mehr für das jeweilige Detektorelement zur Verfügung steht. Außerdem sind bei derartigen zuschaltbaren Kapazitäten unerwünschte Kalibrierungen erforderlich.

Der im Zusammenhang mit der Erfindung genannte Belichtungsvorgang zeichnet sich dadurch aus, dass erst zum Abschluss des Belichtungsvorgangs die in dem Detektorelement vorhandene Ladung vollständig ausgelesen oder entfernt wird, d.h. die vorgenannte Restladung bleibt bis zu dem letzten Ausleseschritt des betreffenden Belichtungsvorgangs erhalten. Insbesondere wird während des einzigen Belichtungsvorgangs - außer nach dem letzten Ausleseschritt - die Rücksetzeinrichtung nicht gleichzeitig mit dem Anlegen eines Transfer-Steuerpulses an das Transfer-Gate aktiviert, d.h. das Detektorelement wird nicht aktiv zurückgesetzt. Sofern im Zusammenhang mit der Erfindung während des Belichtungsvorgangs die Rücksetzeinrichtung aktiviert wird, bedeutet dies, dass lediglich die an dem Auslöseknoten vorhandene Ladung entfernt bzw. auf einen Referenzwert rückgesetzt wird (entsprechend dem zu Fig. 1 erläuterten "Reset 1"), ohne durch gleichzeitiges Öffnen des Transfer-Gate auch das Detektorelement zu entleeren (was dem zu Fig. 1 erläuterten "Reset 2" entspräche).

Grundsätzlich ist es möglich, dass - sofern während eines einzigen Belichtungsvorgangs mehr als zwei Ausleseschritte durchgeführt werden - die vor dem letzten Transfer-Steuerpuls angelegten Transfer-Steuerpulse zumindest teilweise voneinander verschiedene Steuerwerte aufweisen. Entsprechend können unterschiedliche Restladungen in dem Detektorelement zurückbleiben. Bevorzugt weisen diese Transfer-Steuerpulse jedoch identische Steuerwerte auf. Hierdurch wird die Bestimmung des vorgenannten Ausgabewerts vereinfacht.

Nach einer Ausbildung der Erfindung sind die Zeitabstände zwischen den einzelnen Ausleseschritten identisch.

Nach einer anderen Ausbildung der Erfindung hingegen sind die Zeitabstände zwischen den einzelnen Ausleseschritten zumindest teilweise voneinander verschieden. Hierdurch ist gegenüber der Ausbildung des Bildsensors mit den gleichbeabstandeten Auslesezeitpunkten eine weitere Steigerung des Dynamikumfangs des Bildsensors möglich, wie nachfolgend noch näher erläutert wird.

Insbesondere können genau zwei Ausleseschritte erfolgen, wobei der erste Ausleseschritt zu einem Zeitpunkt erfolgt, der innerhalb der letzten M % der Zeitdauer des Belichtungsvorgangs liegt, wobei M höchstens den Wert 50 und insbesondere den Wert 50, 40, 30, 20 oder 10 besitzt. Der Belichtungsvorgang wird dabei in einen ersten Zeitabschnitt und einen zweiten, darauffolgenden Zeitabschnitt unterteilt. Die maximale Aussteuerbarkeit des jeweiligen Pixels kann hierbei um einen Faktor gesteigert werden, der von dem Verhältnis der Dauer des ersten Zeitabschnitts zu der Dauer des zweiten Zeitabschnitts und von der Höhe des jeweiligen Transfer-Steuerpulses abhängt, mit dem das Transfer-Gate teilweise geöffnet wird. Nachteilig hierbei ist in manchen Anwendungen, dass durch die verschiedenen Dauern der beiden vorgenannten Zeitabschnitte bei bewegten Motiven unterschiedliche Bewegungsunschärfen und unterschiedliche Positionen im Bild (= Ortsversatz) entstehen. Insbesondere der Ortsversatz führt bei Bildsensoren, die mit einer Farbmosaikmaske versehen sind, zu Fehlern bei der Farbrekonstruktion bzw. Farbinterpolation.

Um dieses Problem zu umgehen, ist es bevorzugt, wenn N Ausleseschritte erfolgen, wobei N ≥ 3, und wobei der Belichtungsvorgang in N Zeitabschnitte unterteilt ist, die durch einen jeweiligen Ausleseschritt beendet werden.

Beispielsweise kann dann eine ungeradzahlige Anzahl N von Ausleseschritten bzw. Zeitabschnitten vorgesehen sein, wobei der Zeitmittelpunkt eines mittleren Zeitabschnitts zumindest im Wesentlichen mit dem Zeitmittelpunkt des Belichtungsvorgangs zusammenfällt. Wird nämlich das Ausleseergebnis des Ausleseschritts, der den mittleren Zeitabschnitt beendet, der Bestimmung des vorgenannten Ausgabewerts zugrunde gelegt, ist der vorgenannte Ortsversatz auch bei schneller bewegten Objekten praktisch ausgeschlossen. Unabhängig davon, ob die Anzahl N von Ausleseschritten bzw. Zeitabschnitten geradzahlig oder ungeradzahlig ist, ist es bevorzugt, wenn wenigstens ein Paar oder ein jeweiliges Paar von vor dem letzten Ausleseschritt erfolgenden Ausleseschritten symmetrisch um den Zeitmittelpunkt des Belichtungsvorgangs verteilt ist.

Hierbei ist es bevorzugt, wenn der mittlere Zeitabschnitt kürzer ist als andere anderen Zeitabschnitte. Bevorzugt wird bei hoher Belichtung nämlich nur der kürzeste aller Zeitabschnitte zur Bestimmung des vorgenannten Ausgabewerts herangezogen, insbesondere dann, wenn lediglich das Ausleseergebnis des Ausleseschritts, der den kürzesten Zeitabschnitt beendet, nicht übersteuert ist, d.h. zu allen anderen Auslesezeitpunkten das Detektorelement sich in Sättigung befand.

Grundsätzlich ist es in dieser Hinsicht bevorzugt, wenn näher zum Zeitmittelpunkt des Belichtungsvorgangs liegende Zeitabschnitte kürzer sind als von dem Zeitmittelpunkt des Belichtungsvorgangs weiter entfernt liegende Zeitabschnitte. Werden nur kürzere Zeitabschnitte der Bestimmung des vorgenannten Ausgabewerts zugrunde gelegt - da die Ausleseergebnisse, die längere Zeitabschnitte beenden, übersteuert sind - kann der vorgenannte Ortsversatz wiederum zumindest im Wesentlichen verhindert werden. Hierbei muss ein mittlerer Zeitabschnitt nicht zwangsläufig vorhanden sein. Vielmehr kann zum Zeitmittelpunkt des Belichtungsvorgangs auch gerade ein Ausleseschritt durchgeführt werden.

Vorzugsweise erfolgen die vor dem letzten Ausleseschritt erfolgende Ausleseschritte - ggf. abgesehen von einem Ausleseschritt, der zum Zeitmittelpunkt des Belichtungsvorgangs durchgeführt wird - zu Zeitpunkten, die symmetrisch um den Zeitmittelpunkt des Belichtungsvorgangs verteilt sind. Auch hierdurch kann ein unerwünschter Ortsversatz bei sich schnell bewegenden Motiven besser vermieden werden.

Nach einer Ausbildung der Erfindung wird, zumindest wenn das Ausleseergebnis des letzten Ausleseschritts einen vorgegebenen Minimalwert nicht überschreitet und das oder die Ausleseergebnisse der vor dem letzten Ausleseschritt erfolgten Ausleseschritte einen vorgegebenen Grenzwert nicht überschreiten, das Ausleseergebnis lediglich des letzten Ausleseschritts der Bestimmung eines Ausgabewerts für die während der fortlaufenden Ladungserzeugung in einem einzigen Belichtungsvorgang in dem jeweiligen Pixel erzeugte Ladung zugrunde gelegt. Hierdurch kann erreicht werden, dass sich das thermische Rauschen bei geringer Belichtung nicht erhöht, wie vorstehend bereits erläutert wurde. Bevorzugt ist der vorgegebene Minimalwert größer als ein Ausleseergebnis, das der vorgenannten Restladung entspricht, und/oder kleiner als ein Ausleseergebnis, das der doppelten Restladung entspricht.

Grundsätzlich ist es hierbei auch möglich, dass der Bestimmung des Ausgabewerts zusätzlich ein Ausleseergebnis eines vor dem letzten Ausleseschritt erfolgten Ausleseschritts zugrunde gelegt wird, das den vorgegebenen Grenzwert überschreitet. Dies ist insbesondere dann von Vorteil, wenn während des Belichtungsvorgangs die Belichtung bzw. die Helligkeit nicht konstant war, beispielsweise ein Blitz aufgetreten ist, der aber nicht durch den letzten Ausleseschritt, sondern nur durch einen oder mehrere der übrigen Ausleseschritte erfassbar ist. Der vorgegebene Grenzwert kann dabei in Abhängigkeit von dem Ausleseergebnis des letzten Ausleseschritts der vorherigen Auslesung gewählt werden. Hierbei ist es bevorzugt, den vorgegebenen Grenzwert umso höher zu wählen, je geringer das Ausleseergebnis des letzten Ausleseschritts der vorherigen Auslesung war.

Bevorzugt wird, wenn das Ausleseergebnis des letzten Ausleseschritts den vorgenannten vorgegebenen Minimalwert überschreitet, das Ausleseergebnis wenigstens eines der vor dem letzten Ausleseschritt erfolgten Ausleseschritte der Bestimmung des vorgenannten Ausgabewerts zugrunde gelegt, sofern das Ausleseergebnis des wenigstens einen der vor dem letzten Ausleseschritt erfolgten Ausleseschritte einen vorgegebenen Maximalwert nicht übersteigt. Bevorzugt wird das Ausleseergebnis des wenigstens einen der vor dem letzten Ausleseschritt erfolgten Ausleseschritte dabei mit dem Ausleseergebnis des letzten Ausleseschritts verrechnet, sofern das Ausleseergebnis des letzten Ausleseschritts den vorgenannten vorgegebenen Maximalwert nicht übersteigt, um damit die maximale Aussteuerbarkeit des jeweiligen Pixels zu erhöhen, wie vorstehend im Zusammenhang mit Anspruch 1 bereits erläutert wurde. Bei dem vorgegebenen Maximalwert handelt es sich bevorzugt um einen Wert, der zumindest im Wesentlichen der Sättigungsgrenze des jeweiligen Pixels entspricht.

Bevorzugt werden hierbei der Bestimmung des Ausgabewerts all diejenigen Ausleseergebnisse der vor dem letzten Ausleseschritt erfolgten Ausleseschritte zugrunde gelegt, die den vorgegebenen Maximalwert nicht erreichen. Bei diesen Ausleseergebnisse kann es sich grundsätzlich um lediglich das Ausleseergebnis des letzten Ausleseschritts, um lediglich das Ausleseergebnis wenigstens eines der vor dem letzten Ausleseschritt erfolgten Ausleseschritte, oder um eine Kombination dieser beiden Möglichkeiten handeln.

Die Erfindung betrifft weiterhin ein entsprechendes Verfahren zum Auslesen eines Bildsensors, insbesondere eines CMOS-Bildsensors, für digitale Kameras.

Bevorzugte Ausführungsformen des erfindungsgemäßen Verfahrens ergeben sich in analoger Weise aus den bevorzugten Ausgestaltungen des erfindungsgemäßen Bildsensors.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: einen 4-Transistor CMOS-Bildsensor, wobei von dem Bildsensor lediglich ein Pixel mit einem Detektorelement und eine dem Pixel zugeordnete Spaltenverstärkerschal- tung dargestellt ist,
- Fig. 2 und 3: den zeitlichen Verlauf der in dem Detektorelement aus Fig. 1 vorhandenen Ladung während eines einzigen Be- lichtungsvorgangs, bei verschiedenen Belichtungen, ge- mäß einer ersten Ausführungsform der Erfindung,
- Fig. 4 bis 6: den zeitlichen Verlauf der in dem Detektorelement aus Fig. 1 vorhandenen Ladung während eines einzigen Be- lichtungsvorgangs, bei verschiedenen Belichtungen, ge- mäß einer zweiten Ausführungsform der Erfindung,
- Fig. 7 bis 9: den zeitlichen Verlauf der in dem Detektorelement aus Fig. 1 vorhandenen Ladung während eines einzigen Be- lichtungsvorgangs, bei verschiedenen Belichtungen, ge- mäß einer dritten Ausführungsform der Erfindung,
- Fig. 10 bis 12: den zeitlichen Verlauf der in dem Detektorelement aus Fig. 1 vorhandenen Ladung während eines einzigen Be- lichtungsvorgangs, bei verschiedenen Belichtungen, ge- mäß einer vierten Ausführungsform der Erfindung, und
- Fig. 13 bis 16: den zeitlichen Verlauf der in dem Detektorelement aus Fig. 1 vorhandenen Ladung während eines einzigen Be- lichtungsvorgangs, bei verschiedenen Belichtungen, ge- mäß einer fünften Ausführungsform der Erfindung.

Der Bildsensor gemäß der vorliegenden Erfindung wird während der fortlaufenden Ladungserzeugung in einem einzigen Belichtungsvorgang in mehreren unmittelbar aufeinander folgenden Ausleseschritten ausgelesen. Um dies zu ermöglichen, ist es beispielsweise vorgesehen, dass der erfindungsgemäße Bildsensor (nicht gezeigt) gegenüber dem Bildsensor aus Fig. 1 mehrere Kondensatoren 33 umfasst, in denen die Ausleseergebnisse der einzelnen Ausleseschritte unabhängig voneinander gespeichert werden können, d.h. es sind genauso viele Kondensatoren 33 vorgesehen, wie Ausleseschritte durchgeführt werden. Bevorzugt werden die mehreren Ausleseergebnisse jedoch insbesondere direkt in mehreren unmittelbar aufeinander folgenden Auslesetakten ausgetaktet, so dass es ausreichend ist, wenn lediglich ein Kondensator 33 vorgesehen ist. Allerdings kann es aus anderen Gründen vorteilhaft sein, mehrere Kondensatoren vorzusehen. Auf der Grundlage derjenigen Ausleseergebnisse, die nicht übersteuert sind, kann dann ein Ausgabewert für die während des Belichtungsvorgangs in dem jeweiligen Pixel 11 erzeugte Ladung bestimmt werden.

In den nachfolgenden Ausführungsbeispielen beträgt die Belichtungszeit eines einzigen Belichtungsvorgangs beispielhaft 20 ms. Lediglich zur einfacheren Erläuterung der Erfindung wird in den Figuren von einer über die Belichtungszeit hinweg konstanten Belichtung ausgegangen.

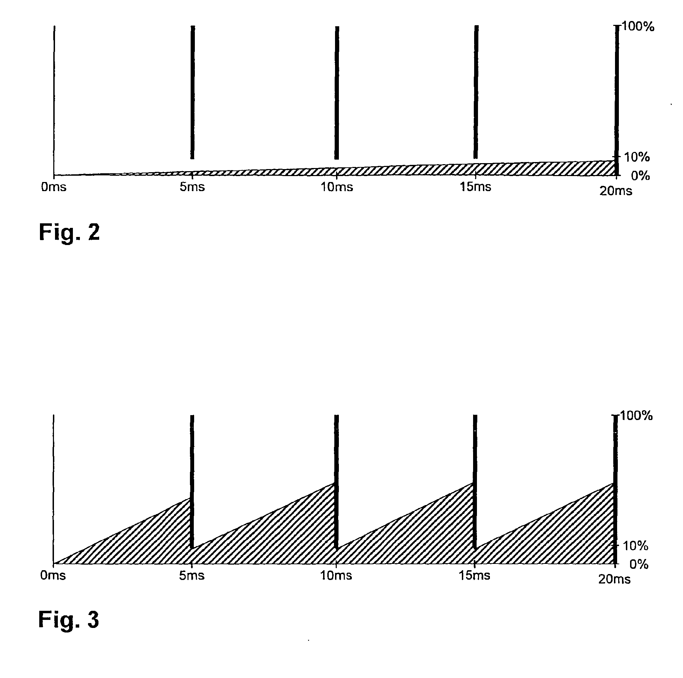

Bei der ersten Ausführungsform gemäß den Fig. 2 und 3 wird das jeweilige Pixel 11 in vier Ausleseschritten ausgelesen, und zwar zu den Zeitpunkten 5 ms, 10 ms, 15 ms und 20 ms. Die Zeitabstände zwischen den einzelnen Ausleseschritten betragen damit jeweils 5 ms. Auf der Ordinatenachse ist die in dem Detektorelement 15 vorhandene Ladung aufgetragen. Bei 100% ist die Sättigungsgrenze des Detektorelements 15 erreicht. Bei jedem Ausleseschritt wird das Transfer-Gate 39 temporär geöffnet, um zu ermöglichen, dass Ladung aus dem Detektorelement 15 in den Ausleseknoten 41 übertragen werden und anschließend zur Erzeugung eines jeweiligen Ausleseergebnisses verwendet werden kann.

Bei dem letzten Ausleseschritt bei 20 ms wird das Transfer-Gate 39 vollständig geöffnet, so dass die gesamte zu diesem Zeitpunkt in dem Detektorelement 15 befindliche Ladung in den Ausleseknoten 41 transferiert werden kann. Die vollständige Öffnung des Transfer-Gates 39 bei 20 ms wird in den Fig. 2 und 3 durch einen senkrechten Balken veranschaulicht, der sich über die gesamte Ordinatenachse erstreckt, d.h. über den gesamten Bereich von 0% bis 100%.

Zu den Auslese-Zeitpunkten 5 ms, 10 ms und 15 ms hingegen wird das Transfer-Gate 39 nicht vollständig, sondern nur teilweise geöffnet, d.h. es wird keine Ladung in den Ausleseknoten 41 übertragen, wenn das Detektorelement 15 zu dem jeweiligen Zeitpunkt nur sehr wenig Ladung enthält. In dem gewählten Beispiel kann nur derjenige Anteil der in dem Detektorelement 15 aktuell enthaltenen Ladung übertragen werden, der einen Füllgrad des Detektorelements 15 von 10% übersteigt. Dies wird zu den Zeitpunkten 5 ms, 10 ms und 15 ms jeweils durch einen senkrechten Balken veranschaulicht, der sich lediglich über den Bereich von 10% bis 100% der Ordinatenachse erstreckt. Enthält das Detektorelement 15 beispielsweise 40% der maximal möglichen Ladung, werden bei einem Ausleseschritt mit nur teilweiser Öffnung des Transfer-Gates 39 lediglich 30% der maximal möglichen Ladung übertragen.

Bei geringer Belichtung wird während des Belichtungsvorgangs in dem Detektorelement 15 nur sehr wenig Ladung erzeugt, wie es in Fig. 2 dargestellt ist.

Da bei den Ausleseschritten zu den Zeitpunkten 5 ms, 10 ms und 15 ms nur Ladung übertragen wird, wenn das Detektorelement 15 zu mehr als 10% gefüllt ist, kann allein anhand des letzten Ausleseschritts zum Zeitpunkt 20 ms erkannt werden, ob bei den zuvor erfolgten Ausleseschritten Ladung übertragen wurde. Bei dem gewählten Beispiel wurde bei den zuvor erfolgten Ausleseschritten Ladung nur dann übertragen, wenn bei dem letzten Ausleseschritt eine Ladungsmenge von mehr als 13,3% ausgelesen wurde.

Die Grenze von 13,3% ergibt sich dabei wie folgt: Damit bei einem der vor dem letzten Ausleseschritt erfolgten Ausleseschritte Ladung übertragen werden kann, muss die in dem Detektorelement 15 zum Zeitpunkt 15 ms befindliche Ladung mindestens 10% betragen, d.h. pro 5 ms müssen wenigstens 3,3% Ladung angesammelt. Werden in den letzten 5 ms nochmals 3,3% Ladung angesammelt, ergibt sich der Wert von 13,3%.

Wurde erkannt, dass bei den Ausleseschritten zu den Zeitpunkten 5 ms, 10 ms und 15 ms keine Ladung übertragen wurde, können die Ausleseergebnisse dieser Ausleseschritte bei der Bestimmung eines Ausgabewerts für die während der fortlaufenden Ladungserzeugung in einem einzigen Belichtungsvorgang in dem jeweiligen Pixel 11 erzeugte Ladung ignoriert werden. Da damit letztlich nur ein einziger Ausleseschritt ausgewertet wird, kann eine Erhöhung des thermischen Rauschens, das ansonsten mit der der Wurzel der Anzahl der ausgewerteten Ausleseschritte steigt, bei geringer Belichtung vermieden werden.

Grundsätzlich ist es denkbar, die Grenze von 13,3% für den Übergang von der ausschließlichen Verwendung des letzten Ausleseergebnisses auf die Verwendung der Ausleseergebnisse aller Ausleseschritte bei der Bestimmung des vorgenannten Ausgabewerts niedriger festzusetzen, z.B. bei 10%. Die jeweils festgesetzte Grenze entspricht dabei einem vorgegebenen Minimalwert.

Insbesondere sofern der vorgenannte Grenzwert nicht niedriger festgesetzt wird, ist es von Vorteil die Ausleseergebnisse der zuvor erfolgten Ausleseschritte auch dann zu untersuchen, wenn das letzte Ausleseergebnis unterhalb des vorgegebenen Minimalwerts liegt. Beispielsweise kann die Belichtung bzw. die Helligkeit während des Belichtungsvorgangs nicht konstant gewesen sein, so dass bei einem der zuvor erfolgten Ausleseschritte tatsächlich Ladung ausgelesen wurde, ohne dass dies anhand des letzten Ausleseergebnisses erkannt werden konnte (da die Belichtung derart gering war, dass in den letzten 5 ms weniger als 3,3% Ladung angesammelt wurden). Sofern sich bei dieser Untersuchung herausstellen sollte, dass das Ausleseergebnis eines der vor dem letzten Ausleseschritt erfolgten Ausleseschritts größer ist als ein vorgegebener Grenzwert, kann dieses Ausleseergebnis bei der Bestimmung des vorgenannten Ausgabewerts dann ebenfalls berücksichtigt werden.

Bei höherer Belichtung, wie es in Fig. 3 dargestellt ist, werden bei jedem Ausleseschritt Ladungen ausgelesen. Folglich werden bei dem Beispiel gemäß Fig. 3 die Ausleseergebnisse aller Ausleseschritte der Bestimmung des vorgenannten Ausgabewerts zugrunde gelegt, insbesondere durch Addieren der Ladungen. Maximal können zum Auslese-Zeitpunkt 5 ms 80% Ladung, zu den Auslese-Zeitpunkten 10 ms und 15 ms jeweils 90% Ladung und zum Auslese-Zeitpunkt 20 ms 100% Ladung ausgelesen werden. Insgesamt kann die maximale Aussteuerbarkeit des jeweiligen Pixels 11 damit auf 360% gesteigert werden. Da gleichzeitig das thermische Rauschen bei geringer Belichtung nicht erhöht ist, wie vorstehend erläutert wurde, kann insgesamt eine Erweiterung des Dynamikumfangs um den Faktor 3,6 erreicht werden.

Sofern der Bestimmung des vorgenannten Ausgabewerts die Ausleseergebnisse mehrerer Ausleseschritte zugrunde gelegt werden, ist das thermische Rauschen leicht erhöht. Wie vorstehend bereits erläutert, beträgt das thermische Rauschen für einen Ausleseschritt z.B. 5 Elektronen. Bei vier Ausleseschritten erhöht sich das thermische Rauschen damit auf 10 Elektronen (= Wurzel aus (4 x 5²)). Beträgt das Ausleseergebnis zum Auslese-Zeitpunkt 20 ms z.B. 13,4%, entspricht dies einer Ladung von 4.020 Elektronen (= 30.000 Elektronen x 13,4%). Bei dieser Ladungsmenge beträgt das sog. Schrot-Rauschen 63,4 (= Wurzel aus 4.020) Elektronen. Das Gesamtrauschen beträgt bei viermaligen Auslesen damit 64,2 Elektronen (= Wurzel aus (63,4² + 10²)), bei einmaligen Auslesen jedoch ebenfalls bereits 63,6 Elektronen (= Wurzel aus (63,4² + 5²)), so dass die Zunahme des Gesamtrauschens durch das mehrmalige Auslesen letztlich vernachlässigbar ist.

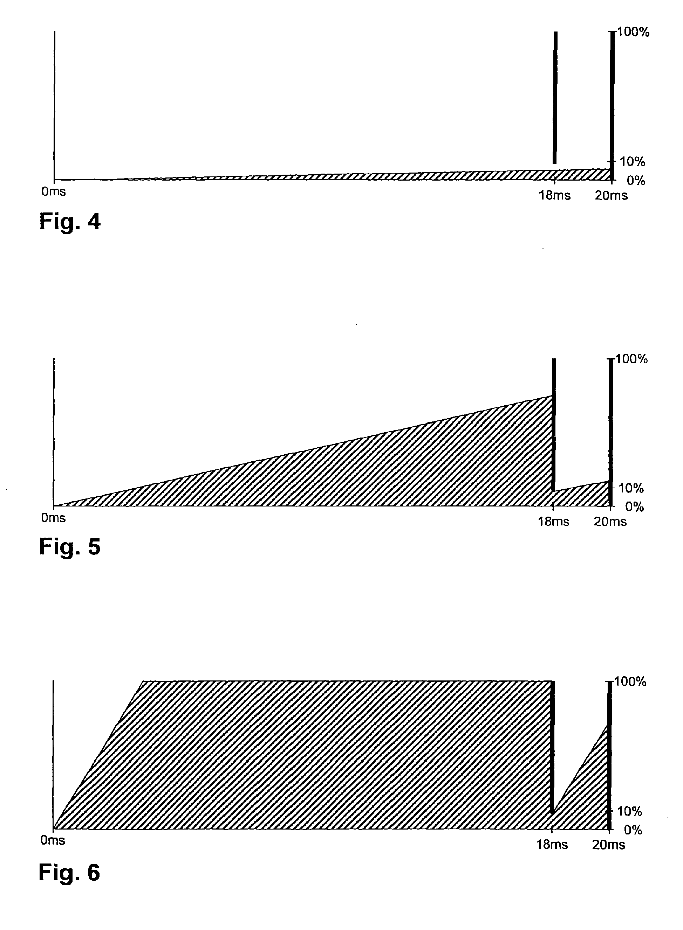

Bei der zweiten Ausführungsform gemäß den Fig. 4 bis 6 kann die maximal auswertbare Helligkeit weiter gesteigert werden. Dabei wird sich zunutze gemacht, dass die einzelnen Ausleseschritte nicht mehr in gleichen Zeitabständen aufeinander erfolgen. In dem gewählten Beispiel erfolgt ein erster Ausleseschritt bei 18 ms, und ein zweiter Ausleseschritt bei 20 ms. Hier können drei Fälle gemäß den drei Fig. 4 bis 6 unterschieden werden.

In Fig. 4 ist die Belichtung relativ gering. Nur bei dem zweiten Ausleseschritt werden Ladungen ausgelesen. In diesem Fall wird der Bestimmung des vorgenannten Ausgabewerts nur das Ausleseergebnis des zweiten Ausleseschritts zugrunde gelegt.

Fig. 5 zeigt den zeitlichen Verlauf der in dem Detektorelement 15 enthaltenen Ladung bei mittlerer Belichtung. Hier werden bereits bei dem ersten Ausleseschritt Ladungen übertragen. Das Ausleseergebnis des ersten Ausleseschritts ist nicht übersteuert. Der Bestimmung des vorgenannten Ausgabewerts können daher die Ausleseergebnisse beider Ausleseschritte zugrunde gelegt werden. Insbesondere wird hierzu die Summe der beiden Ausleseergebnisse berechnet. Würde eine mit dem ersten Transfer-Steuerpuls von dem Detektorelement 15 zu dem Ausleseknoten 41 transferierte Ladung nicht ausgelesen, sondern nur gelöscht, könnte dem vorgenannten Auslesewert auch bei mittlerer Belichtung gemäß Fig. 5 nur ein einziges Auslesergebnis zugrunde gelegt werden, nämlich das zweite Ausleseergebnis.

Nur bei relativ hoher Belichtung, wie es in Fig. 6 gezeigt ist, ist das Ausleseergebnis des ersten Ausleseschritts übersteuert, d.h. das Ausleseergebnis übersteigt einen vorgegebenen Maximalwert. Da beim ersten Ausleseschritt die in dem Detektorelement 15 zu diesem Zeitpunkt vorhandene Ladung bis auf 10% ausgelesen und damit gelöscht wurde, muss die Ladungsmenge, die beim zweiten Ausleseschritt vorhanden ist und 10% Ladung übersteigt, in den 2 ms zwischen den beiden Ausleseschritten entstanden sein. Durch diese deutlich verkürzte effektive Belichtungszeit - 2 ms statt 20 ms - kann durch das jeweilige Pixel 11 eine wesentlich höhere Belichtung bzw. Helligkeit ausgewertet werden. Eine Übersteuerung tritt in diesem Beispiel erst bei 900% Helligkeit auf.

Nachteilig hierbei ist jedoch, dass durch die unterschiedlichen Belichtungszeiten bei bewegten Motiven unterschiedliche Bewegungsunschärfen und vor allem unterschiedliche Positionen im Bild entstehen, d.h. es tritt ein Ortsversatz auf.

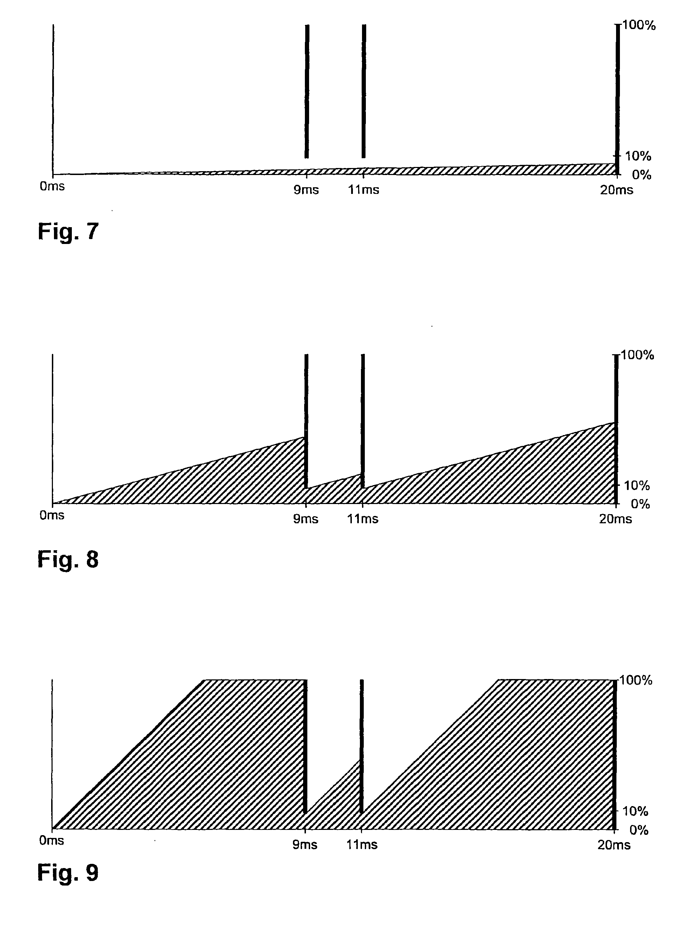

Ein derartiger Ortsversatz kann bei der dritten Ausführungsform gemäß den Fig. 7 bis 9 zumindest weitgehend vermieden werden. Dies kann dadurch erreicht werden, dass der Zeitmittelpunkt des Zeitraums des Belichtungsvorgangs, der der Bestimmung des vorgenannten Ausgabewerts jeweils zugrunde gelegt wird, mit dem Zeitmittelpunkt des Belichtungsvorgangs zusammenfällt. Insgesamt erfolgen drei Ausleseschritte, nämlich zu den Zeitpunkten 9 ms, 11 ms und 20 ms. Der Zeitraum von 0 ms bis 9 ms stellt einen vorderen Zeitabschnitt dar, der Zeitraum von 9 ms bis 11 ms einen mittleren Zeitabschnitt, und der Zeitraum von 11 ms bis 20 ms einen hinteren Zeitabschnitt. Grundsätzlich ist ein Zeitabschnitt durch den Beginn des Belichtungsvorgangs (Entfernen von Restladungen aus dem Detektorelement 15) und dem nachfolgenden Ausleseschritt bzw. durch zwei unmittelbar aufeinander folgende Ausleseschritte definiert. Wiederum können drei Fälle gemäß den drei Fig. 7 bis 9 unterschieden werden.

Bei geringer Belichtung (Fig. 7) werden nur bei dem letzten Ausleseschritt bei 20 ms Ladungen ausgelesen. Entsprechend wird - wie in Fig. 4 - nur das Ausleseergebnis des letzten Ausleseschritts zur Bestimmung des vorgenannten Ausgabewerts verwendet. Der Zeitraum des Belichtungsvorgangs, der der Bestimmung des vorgenannten Ausgabewerts zugrunde gelegt wird, entspricht dem Zeitraum von 0 ms bis 20 ms.

Bei mittlerer Belichtung (Fig. 8) werden bei allen drei Ausleseschritten Ladungen transferiert und keines der entsprechenden Ausleseergebnisse ist übersteuert. In diesem Fall werden - wie in Fig. 5 - alle Ausleseergebnisse zur Bestimmung des vorgenannten Ausgabewerts verwendet, d.h. die gesamte in dem Detektorelement 15 erzeugte Ladung wird ausgelesen und trägt zur Erzeugung der Ausleseergebnisse bei. Insbesondere wird hierzu die Summe der drei Ausleseergebnisse berechnet. Der Zeitraum des Belichtungsvorgangs, der der Bestimmung des vorgenannten Ausgabewerts zugrunde gelegt wird, entspricht wiederum dem Zeitraum von 0 ms bis 20 ms.

Nur bei relativ hoher Belichtung (Fig. 9) ist das Ausleseergebnis zumindest des dritten Ausleseschritts bei 20 ms übersteuert. Das Ausleseergebnis des zweiten Ausleseschritts bei 11 ms ist jedoch nicht übersteuert. Da durch den ersten Ausleseschritt bei 9 ms die zu diesem Zeitpunkt in dem Detektorelement 15 vorhandene Ladung bis auf 10% Ladung gelöscht wurde, muss die Ladungsmenge, die beim zweiten Ausleseschritt vorhanden ist und 10% Ladung übersteigt, zwangsläufig in den 2 ms zwischen dem ersten Ausleseschritt und dem zweiten Ausleseschritt entstanden sein. Wie in Fig. 6 kann durch die deutlich verkürzte effektive Belichtungszeit eine wesentlich höhere Belichtung ausgewertet werden. Eine Übersteuerung tritt auch in diesem Beispiel erst bei 900% Helligkeit auf. Bei der dritten Ausführungsform kann der Zeitraum des Belichtungsvorgangs, der der Bestimmung des vorgenannten Ausgabewerts zugrunde gelegt wird, d.h. die effektive Belichtungszeit, also entweder 20 ms (Fig. 7 und 8) oder 2 ms (Fig. 9) betragen. Für beide Zeiträume liegt der Zeitmittelpunkt jeweils bei 10 ms. Da sich der Zeitmittelpunkt der effektiven Belichtungszeit beim Übergang von einer Situation gemäß den Fig. 7, 8 auf eine Situation gemäß Fig. 9 nicht verändert, bleibt auch die Position von hellen Objekten im Bild erhalten.

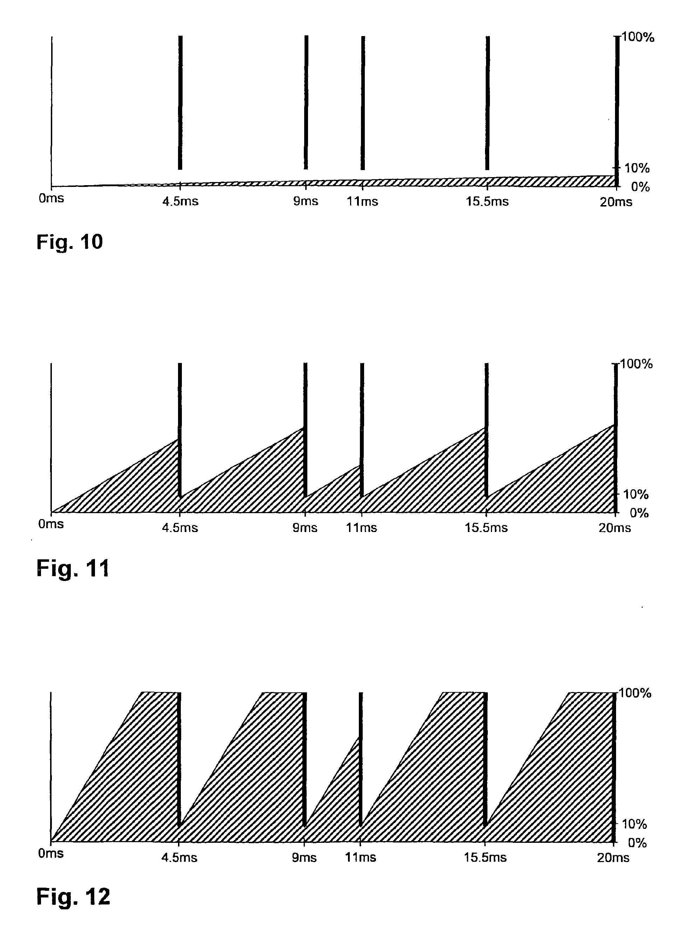

Die dritte Ausführungsform (kurzer mittlerer Zeitabschnitt) und die erste Ausführungsform (identische Zeitabschnitte) können auch zu einer vierten Ausführungsform, wie sie in den Fig. 10 bis 12 gezeigt ist, kombiniert werden. So ist es beispielsweise möglich, bei fünf Ausleseschritten die Ausleseschritte mit lediglich teilweiser Öffnung des Transfer-Gate 39 zu den Zeitpunkten 4,5 ms, 9 ms, 11 ms und 15,5 ms durchzuführen, und den vollständigen Ausleseschritt wiederum bei 20 ms.

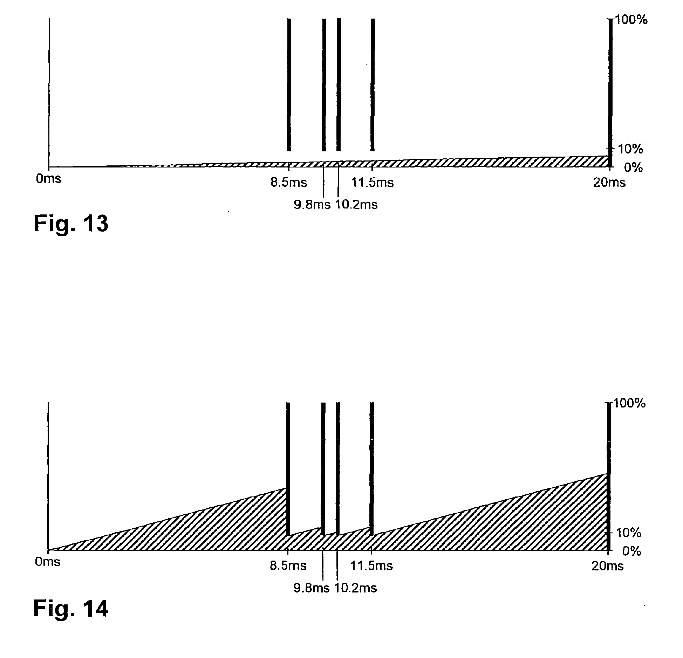

Bei der fünften Ausführungsform gemäß den Fig. 13 bis 16, die eine Weiterentwicklung der dritten Ausführungsform darstellt, erfolgen die einzelnen Ausleseschritte derart, dass nicht nur zwei, sondern drei Zeiträume des Belichtungsvorgangs, die in Abhängigkeit von der Belichtung jeweils der Bestimmung des vorgenannten Ausgabewerts zugrunde gelegt werden können, vorhanden sind. Die drei Zeiträume betragen in dem gewählten Beispiel 0,4 ms, 3 ms und 20 ms. Dies wird dadurch erreicht, dass die Ausleseschritte zu den Zeitpunkten 8,5 ms, 9,8 ms, 10,2 ms, 11,5 ms und 20 ms durchgeführt werden, d.h. es entsteht ein vorderer Zeitabschnitt mit einer Dauer von 8,5 ms, ein darauf folgender Zeitabschnitt mit einer Dauer von 1,3 ms, ein mittlerer Zeitabschnitt mit einer Dauer von 0,2 ms, ein darauf folgender Zeitabschnitt mit einer Dauer von wiederum 1,3 ms und ein hinterer Zeitabschnitt mit einer Dauer von wiederum 8,5 ms. Es können nun vier Fälle unterschieden werden.

Bei geringer Belichtung, wie es in Fig. 13 gezeigt ist, wird nur bei dem letzten Ausleseschritt Ladung übertragen. Es wird daher - wie in den Fig. 4 und 7 - nur das Ausleseergebnis des letzten Ausleseschritts zur Bestimmung des vorgenannten Ausgabewerts verwendet. Die effektive Belichtungszeit beträgt 3 ms.

Bei mittlerer Belichtung (Fig. 14) wird bei allen vier Ausleseschritten Ladung übertragen und keines der entsprechenden Ausleseergebnisse ist übersteuert. Wie in den Fig. 5 und 8 werden daher alle Ausleseergebnisse zur Bestimmung des vorgenannten Ausgabewerts verwendet, insbesondere aufaddiert. Die effektive Belichtungszeit beträgt wiederum 3 ms.

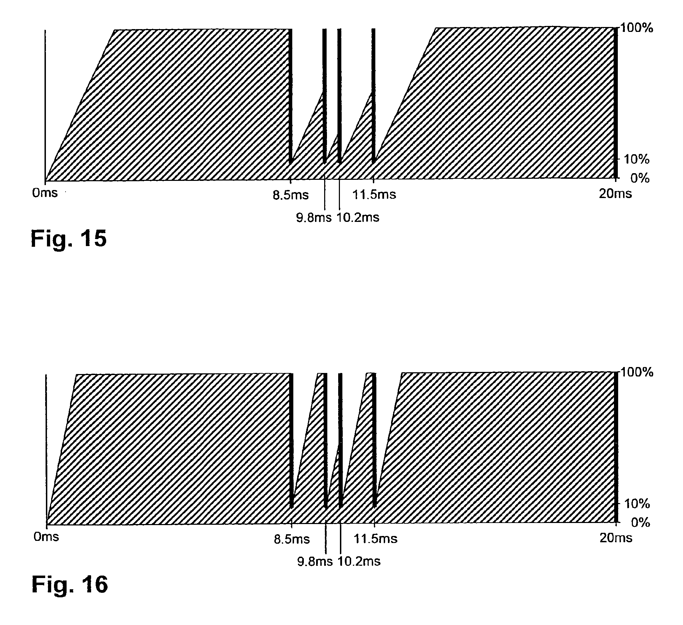

Bei höherer Belichtung (Fig. 15) ist das Ausleseergebnis zumindest des letzten Ausleseschritts übersteuert, ggf. zusätzlich auch das Ausleseergebnis des ersten Ausleseschritts. Die Ausleseergebnisse der Ausleseschritte zu den Zeitpunkten 9,8 ms, 10,2 ms und 11,5 ms hingegen sind nicht übersteuert. Diese drei Ausleseergebnisse werden nun aufaddiert, um den vorgenannten Ausgabewert zu bestimmen. Die effektive Belichtungszeit beträgt 3 ms.

Bei hoher Belichtung, wie es in Fig. 16 gezeigt ist, ist nur noch das Ausleseergebnis des Ausleseschritts zum Zeitpunkt 10,2 ms nicht übersteuert, so dass die Bestimmung des vorgenannten Ausgabewerts auch nur noch auf diesem Ausleseergebnis basiert. Die effektive Belichtungszeit beträgt nur noch 0,4 ms.

Bei dem beschriebenen Bildsensor bzw. dem beschriebenen Verfahren bleibt die maximale Lichtempfindlichkeit eines Pixels erhalten, da das thermische Rauschen bei geringer Belichtung bzw. Helligkeit nicht erhöht wird. Durch das Auslesen der während eines einzigen Belichtungsvorgangs erzeugten Ladung in mehreren Ausleseschritten bereits während der Ladungserzeugung kann die maximale Aussteuerung des jeweiligen Pixels erhöht werden. Daher kann durch die vorliegende Erfindung der Dynamikbereich der Pixel eines Bildsensors erweitert werden.

### Bezugszeichenliste

- 11: Pixel
- 13: Spaltenverstärkerschaltung
- 15: Pinned-Diode
- 17: Spaltenleitung
- 27: erster Kondensator
- 31: Verstärker
- 33: zweiter Kondensator
- 35: positiver Eingang
- 36: Ausgang
- 37: negativer Eingang
- 39: Transfer-Gate
- 41: Ausleseknoten
- 43: Wandler-FET
- 45: Rücksetzt-FET
- 47: Auswahl-FET
- 49: Schalter
- 51: positive Spannungsversorgung
- 53: Steuereinrichtung

## Patentansprüche

1. Bildsensor, insbesondere CMOS-Bildsensor für digitale Kameras, mit einer Vielzahl von in Zeilen und Spalten angeordneten Pixeln (11), wobei das jeweilige Pixel (11) umfasst:
ein lichtempfindliches Detektorelement (15), um während eines Belichtungsvorgangs aus einfallendem Licht elektrische Ladung zu erzeugen,
einen Ausleseknoten (41),
ein Transfer-Gate (39), an das ein Transfer-Steuerpuls anlegbar ist, um einen Ladungstransfer von dem Detektorelement (15) zu dem Ausleseknoten (41) zu ermöglichen, und
eine Rücksetzeinrichtung (45), um eine in dem Ausleseknoten (41) vorhandene Ladung auf einen Referenzwert rückzusetzen;
und mit einer Steuereinrichtung (53) zum Steuern des Transfer-Gates (39) und der Rücksetzeinrichtung (45) des jeweiligen Pixels (11) ;
**dadurch gekennzeichnet,**
**dass** die Steuereinrichtung (53) so ausgelegt ist, dass das jeweilige Pixel (11) während der fortlaufenden Ladungserzeugung in einem einzigen Belichtungsvorgang in mehreren Ausleseschritten ausgelesen wird, und zwar derart, dass für jeden der mehreren Ausleseschritte ein jeweiliger Transfer-Steuerpuls an das Transfer-Gate (39) angelegt und danach ein jeweiliges Ausleseergebnis erzeugt wird, wobei zwischen den Transfer-Steuerpulsen des jeweiligen Belichtungsvorgangs die Rücksetzeinrichtung (45) aktiviert wird, und wobei lediglich der letzte Transfer-Steuerpuls einen vollständigen Ladungstransfer der jeweiligen in dem Detektorelement (15) vorhandenen Ladung zu dem Ausleseknoten (41) ermöglicht.

2. Bildsensor nach Anspruch 1,
**dadurch gekennzeichnet,**
**dass** die vor dem letzten Transfer-Steuerpuls angelegten Transfer-Steuerpulse identische Steuerwerte aufweisen.

3. Bildsensor nach Anspruch 1 oder 2,
**dadurch gekennzeichnet,**
**dass** die Zeitabstände zwischen den einzelnen Ausleseschritten identisch sind.

4. Bildsensor nach Anspruch 1 oder 2,
**dadurch gekennzeichnet,**
**dass** die Zeitabstände zwischen den einzelnen Ausleseschritten zumindest teilweise voneinander verschieden sind.

5. Bildsensor nach Anspruch 4,
**dadurch gekennzeichnet,**
**dass** genau zwei Ausleseschritte erfolgen, wobei der erste Ausleseschritt zu einem Zeitpunkt erfolgt, der innerhalb der letzten M % der Zeitdauer des Belichtungsvorgangs liegt, wobei M höchstens den Wert 50 und insbesondere den Wert 10 besitzt.

6. Bildsensor nach zumindest einem der Ansprüche 1 bis 4,
**dadurch gekennzeichnet,**
**dass** N Ausleseschritte erfolgen, wobei N≥3, und wobei der Belichtungsvorgang in N Zeitabschnitte unterteilt ist, die durch einen jeweiligen Ausleseschritt beendet werden.

7. Bildsensor nach Anspruch 6,
**dadurch gekennzeichnet,**
**dass** die Anzahl N der Zeitabschnitte ungeradzahlig ist, wobei der Zeitmittelpunkt des Belichtungsvorgangs in den mittleren Zeitabschnitt der N Zeitabschnitte fällt, und/oder wobei der mittlere Zeitabschnitt der N Zeitabschnitte kürzer ist als die anderen der N Zeitabschnitte.

8. Bildsensor nach Anspruch 6 oder 7,
**dadurch gekennzeichnet,**
**dass** näher zum Zeitmittelpunkt des Belichtungsvorgangs liegende Zeitabschnitte kürzer sind als von dem Zeitmittelpunkt des Belichtungsvorgangs weiter entfernt liegende Zeitabschnitte, und/oder
**dass** die vor dem letzten Ausleseschritt erfolgenden Ausleseschritte zu Zeitpunkten erfolgen, die symmetrisch um den Zeitmittelpunkt des Belichtungsvorgangs verteilt sind.

9. Bildsensor nach einem der Ansprüche 6 bis 8,
**dadurch gekennzeichnet,**
**dass** wenigstens ein Paar von Ausleseschritten, die vor dem letzten Ausleseschritt erfolgen, symmetrisch um den Zeitmittelpunkt des Belichtungsvorgangs verteilt ist.

10. Bildsensor nach zumindest einem der vorstehenden Ansprüche,
**dadurch gekennzeichnet,**
**dass**, zumindest wenn das Ausleseergebnis des letzten Ausleseschritts einen vorgegebenen Minimalwert nicht überschreitet und das oder die Ausleseergebnisse der vor dem letzten Ausleseschritt erfolgten Ausleseschritte einen vorgegebenen Grenzwert nicht überschreiten, das Ausleseergebnis lediglich des letzten Ausleseschritts der Bestimmung eines Ausgabewerts für den Belichtungsvorgang zugrunde gelegt wird.

11. Bildsensor nach Anspruch 10,
**dadurch gekennzeichnet,**
**dass** der Bestimmung des Ausgabewerts zusätzlich ein Ausleseergebnis eines vor dem letzten Ausleseschritt erfolgten Ausleseschritts zugrunde gelegt wird, das den vorgegebenen Grenzwert überschreitet.

12. Bildsensor nach zumindest einem der vorstehenden Ansprüche,
**dadurch gekennzeichnet,**
**dass**, wenn das Ausleseergebnis des letzten Ausleseschritts einen vorgegebenen Minimalwert überschreitet, das Ausleseergebnis wenigstens eines der vor dem letzten Ausleseschritt erfolgten Ausleseschritte der Bestimmung eines Ausgabewerts für den Belichtungsvorgang zugrunde gelegt wird, sofern das Ausleseergebnis des betreffenden Ausleseschritts einen vorgegebenen Maximalwert nicht übersteigt.

13. Bildsensor nach Anspruch 12,
**dadurch gekennzeichnet,**
**dass** der Bestimmung des Ausgabewerts all diejenigen Ausleseergebnisse der vor dem letzten Ausleseschritt erfolgten Ausleseschritte zugrunde gelegt werden, die den vorgegebenen Maximalwert nicht übersteigen.

14. Verfahren zum Auslesen eines Bildsensors, insbesondere eines CMOS-Bildsensors, für digitale Kameras, wobei der Bildsensor eine Vielzahl von in Zeilen und Spalten angeordneten Pixeln umfasst, bei dem
- mittels eines lichtempfindlichen Detektorelements (15) während eines Belichtungsvorgangs aus einfallendem Licht elektrische Ladung erzeugt wird,
- an ein Transfer-Gate (39) ein Transfer-Steuerpuls angelegt wird, um einen Ladungstransfer von dem Detektorelement (15) zu einem Ausleseknoten (41) zu ermöglichen, und
- mittels einer Rücksetzeinrichtung (45) eine in dem Ausleseknoten (41) vorhandene Ladung auf einen Referenzwert rückgesetzt wird,
**dadurch gekennzeichnet,**
**dass** das jeweilige Pixel (11) während der fortlaufenden Ladungserzeugung in einem einzigen Belichtungsvorgang in mehreren Ausleseschritten ausgelesen wird, und zwar derart, dass für jeden der mehreren Ausleseschritte ein jeweiliger Transfer-Steuerpuls an das Transfer-Gate (39) angelegt und danach ein jeweiliges Ausleseergebnis erzeugt wird, wobei zwischen den Transfer-Steuerpulsen des jeweiligen Belichtungsvorgangs die Rücksetzeinrichtung (45) aktiviert wird, und wobei lediglich der letzte Transfer-Steuerpuls einen vollständigen Ladungstransfer der jeweiligen in dem Detektorelement (15) vorhandenen Ladung zu dem Ausleseknoten (41) ermöglicht.
